# EUROPEAN PATENT APPLICATION

(11) **EP 4 825 762 A1**
(43) Date of publication of application: **21.10.2026**
(21) Application number: 25170794.9
(22) Date of filing: 15.04.2025
(51) Int. Cl.: B65G 25/02, B65G 1/04, B65G 25/08, B65D 25/00, B65D 25/10

(54) **A GOODS HANDLING STATION**

(71) Applicant: AutoStore Technology AS, 5578 Nedre Vats (NO)
(72) Inventor: AUSTRHEIM, Trond, 5578 Nedre Vats (NO); FJELDHEIM, Ivar, 5578 Nedre Vats (NO)
(74) Representative: Kilburn & Strode LLP

(57) **Abstract**

The disclosure relates to a goods handling station for transferring goods to and/or from a container of an automated storage and retrieval system. The goods handling station comprises a container receiving area configured to receive a container of the automated storage and retrieval system, and a goods manipulator. The goods manipulator comprises a support element for supporting goods, the support element arranged to extend into a container received at the container receiving area, and a movement mechanism operable to move the support element along a looped path for moving goods laterally in steps, wherein the looped path passes above and below a level of a base of a container receiving at the container receiving area.

## Description

### TECHNICAL FIELD

The disclosure relates to a goods handling station. More particularly, it relates to a goods handling station for transferring goods to and/or from a container of an automated storage and retrieval system, and a container adapted for use with the goods handling station.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The ports or stations at the periphery of the grid are typically used by warehouse operatives who can pick and pack goods. In other examples, the ports of stations may comprise automated arrangements for placing goods into or removing goods from a container.

Such automated arrangements are generally suitable for picking or packing the entire contents of the container in one operation. Alternatively, robotic arms may be used to pick and pack individual items, or provide a greater level of control over the picking and packing process, but these are complex arrangements which are more difficult to maintain and operate.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Figs. 5a and 5b show perspective views of a goods handling station according to an example of the present disclosure;
Fig. 6 shows a view of a portion of a goods manipulator that may be used in a goods handling station;
Figs. 7a-7e are schematic drawings showing a cross-sectional view of an item within a container receiving at the container handling position of a goods handling station;
Fig. 8 shows a perspective view of a container;
Fig. 9 shows a flow chart of a method; and
Fig. 10 shows a cross-sectional perspective view of a goods handling station.

### DETAILED DESCRIPTION

In overview, the disclosure relates to a goods handling station for transferring goods to and/or from a container of an automated storage and retrieval system. The goods handling station comprises a container receiving area configured to receive a container of the automated storage and retrieval system; and a goods manipulator. The goods manipulator comprises a support element (which may also be referred to herein as a platform) for supporting goods, the support element arranged to extend into a container received at the container receiving area, and a movement mechanism operable to move the support element along a looped path for moving goods laterally (e.g., in a direction which is generally parallel to the base of the container) in steps. The looped path may pass above and below a level of a base of a container received at the container receiving area (for example such that goods are alternately lifted from and lowered onto a base of a container received at the container receiving area in use). Providing a goods handling station having a goods manipulator which is configured in this way allows more control over the movement of goods into and out of the container, as the goods are moved by steps (e.g., allowing goods to be moved by small distances within the container). Moving the support element about the looped path lifts goods from the base of the container, moves the goods laterally, then deposits the goods back onto the base of the container at a different position, wherein one loop moves the goods laterally by one step. As described below, if a plurality of goods are present in the container, this arrangement may allow goods to be moved out of the container one at a time, for example (e.g., such that the goods handling station may be operated as a vending machine at the edge of the grid). However, the arrangement is also suitable for large goods, and may be utilised with goods of any shape or size that can be stored in the container. Such motion of the support element also allows a simpler movement mechanism to be provided, making the goods handling station easier to maintain, and also more robust, than known arrangements (e.g., robotic arms).

Optionally, the goods manipulator comprise a plurality of elongate support elements. For example, each support element may have a length which is the same as, or nearly the same as, a horizontal dimension (e.g., width or length) of a container, such that the support elements can move goods which are placed at any position within the container. The plurality of elongate support elements may be spaced apart from one another, such that the plurality of support elements are spaced across a same width as a horizontal dimension (e.g., width or length, in particular a dimension perpendicular to the length of the support elements) of a container, such that the support elements can move goods which are placed at any position within the container.

Optionally, the support element may have a corrugated upper surface. That is, the upper surface of the support element may comprises a series of ridges and/or troughs. This can allow goods to lie stably on the support element in use, and aids movement of individual items as they may be held in place by the corrugations and so do not move relative to the support element when the support element is in motion. For example, the size or spacing of the corrugations (e.g., the distance between peaks and/or troughs) may be configured according to the goods that are stored by the container so that each corrugation is configured to receive a single item therein, aiding operation of the goods handling station in dispensing items one at a time. In some examples, the support element may comprise an upstanding tooth extending from an apex of each corrugation. This tooth aids movement of individual items, by ensuring that items are divided between the different corrugations. Together, the teeth may support items which are larger than the spacing of the corrugations.

Optionally, the support element may be arranged to extend into a container received at the container handling area from below the container receiving area. For example, the movement mechanism may also be located below the container receiving area. Such an arrangement may provide a compact goods handling station.

Optionally, the goods manipulator may comprise a plurality of independently operable movement mechanisms. In this way, the goods manipulator may independently move goods at which are at different positions within the container, providing improved control over how goods are moved into or out of the container. For example, each movement mechanism may be configured to move a pair of elongate support elements of the support element. A pair of support elements may be moved together to provide suitable support for one or more items, though it will be appreciated that more support elements may be moved by each movement mechanism, such as three support elements, four support elements, or more. The goods manipulator may comprise any suitable number of independently operable movement mechanisms (such as two or more movement mechanisms, such as three movement mechanisms), and the number may depend on the size of the container, and the number of support elements which are controlled by each movement mechanism. In one example, four independently operable movement mechanisms may be provided across the extent of the container receiving area.

Optionally, the movement mechanism may comprise a belt drive and a mechanical linkage connected between the belt drive and the support element for moving the support element along the looped path. This provides a mechanically simple movement mechanism which is robust and easy to maintain.

Optionally, the goods handling station may comprise a chute extending from a side thereof, wherein the goods manipulator is configured to move goods to the chute. Goods may be dispensed from the container through the chute, while the chute prevents direct access to the container. This can help to make the goods handling station more suitable for use as a vending machine (that is, where the goods handling station is provided for use by the general public and not necessarily by trained warehouse operatives) by distancing the goods handling station from users by the length of the chute such that a user cannot access the components of the goods handling station.

The present disclosure also provides a container that is adapted for use with the goods handling station. The container is for storing foods in an automated storage and retrieval system, and comprises a base for supporting goods, and upstanding sidewall extending about the circumference of the base, a plurality of apertures through the base (e.g., through which a support element may extend into the container for manipulating goods), and an opening through the upstanding sidewall (e.g., through which goods may be moved into and/or out of the container). For example, the base may have four sides to provide a generally rectangular container, and the upstanding sidewall may extend along each of the sides of the base. In some examples, the opening through the sidewall may be provided by substantially removing the sidewall along one side of the base. The container may be open at a top side opposite the base to facilitate picking and/or packing of the container by a warehouse operative.

Optionally, the plurality of apertures may comprise a plurality of parallel slots which extend across the base. Such an arrangement of slots can enable the goods manipulator of the goods handling station to interact with goods at any position within the container.

Optionally, the base may have a corrugated upper face. For example, the base may have similar corrugations as the support element of the goods manipulator. That is, the upper face of the base may comprises a series of ridges and/or troughs. This can allow goods to lie stably on the base in use. For example, the corrugations extend across the base in a direction that is perpendicular to a plurality of parallel slots through the base. For example, the size or spacing of the corrugations (e.g., the distance between peaks and/or troughs) may be configured according to the goods that are stored by the container so that each corrugation is configured to receive a single item therein. The configuration of the corrugations may be substantially the same as those of a support element of the goods handling station, for example.

The present disclosure also provides a method (e.g., performed under the control of a computer or computer processing system) of transferring goods to and/or from a container of an automated storage and retrieval system using a goods handling station as described herein. The method comprises receiving instructions for transferring goods to or from a container; and moving, by the goods manipulator, goods laterally in steps into or out of the container based on the received instructions.

In some examples, the method may further comprise receiving, at the container receiving area, a container of the automated storage and retrieval system. For example, this may comprise causing a container-handling vehicle to deliver a container to the container receiving area (e.g., via a port column or the like).

The present disclosure also provides a computer-readable medium comprising instructions which, when executed by a processor of a system, cause the system to perform a method as described herein.

### Automated storage and retrieval system overview

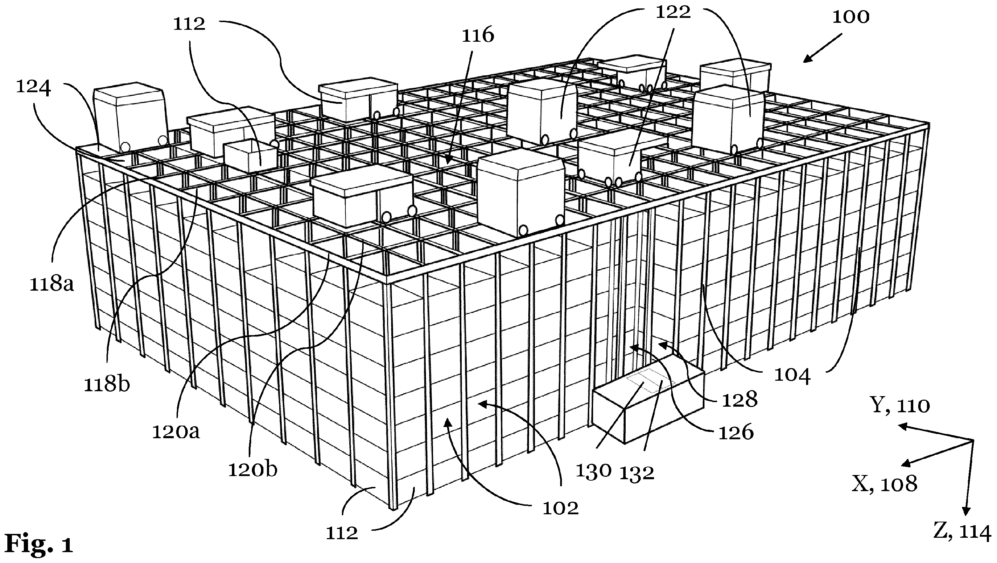

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

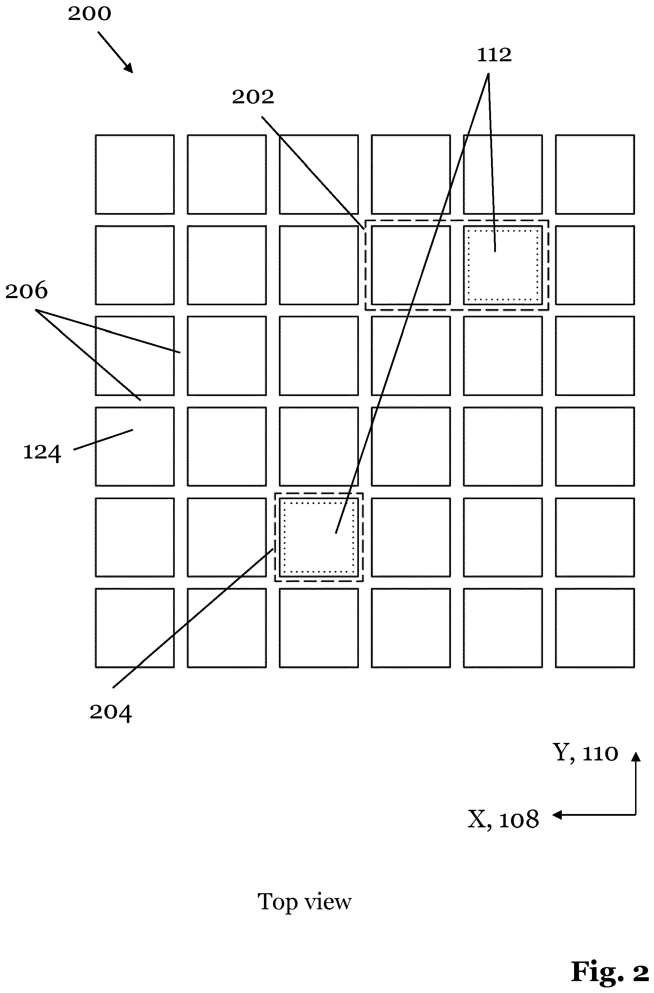

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

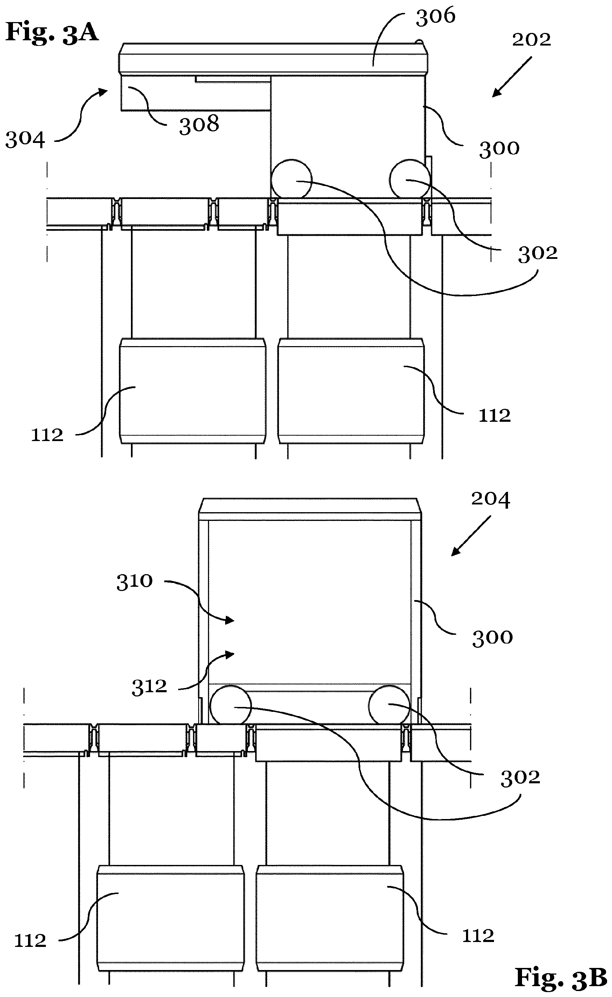

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

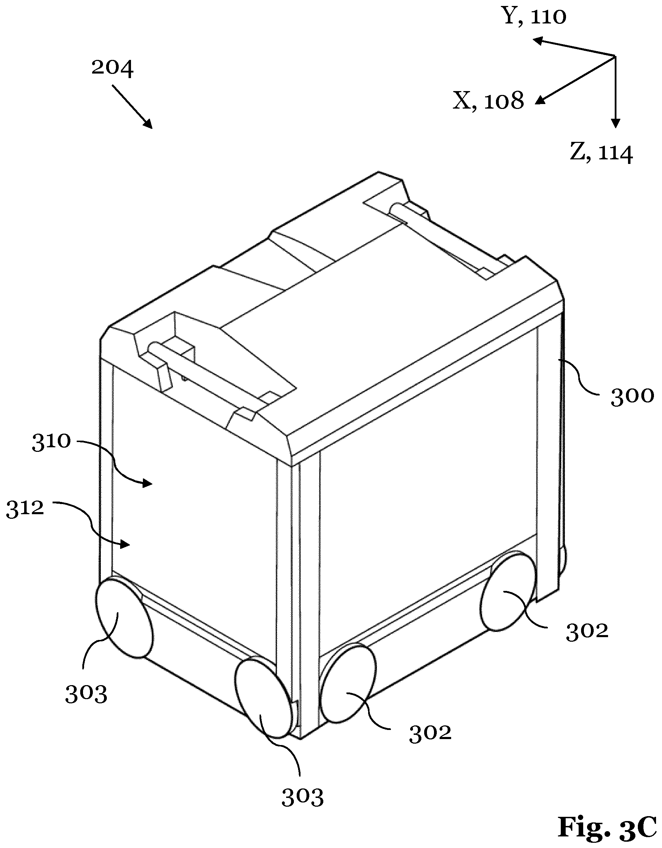

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

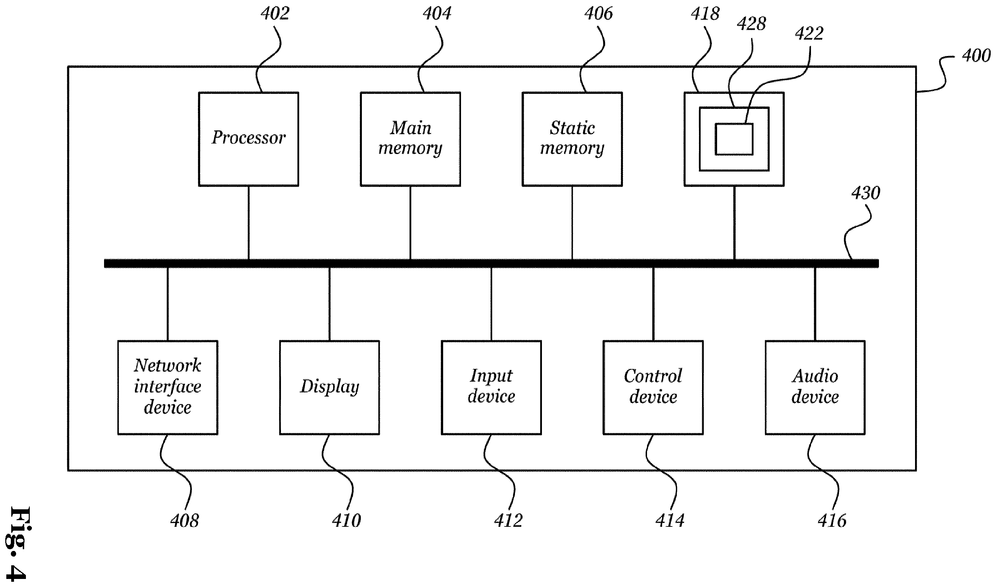

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Goods handling station

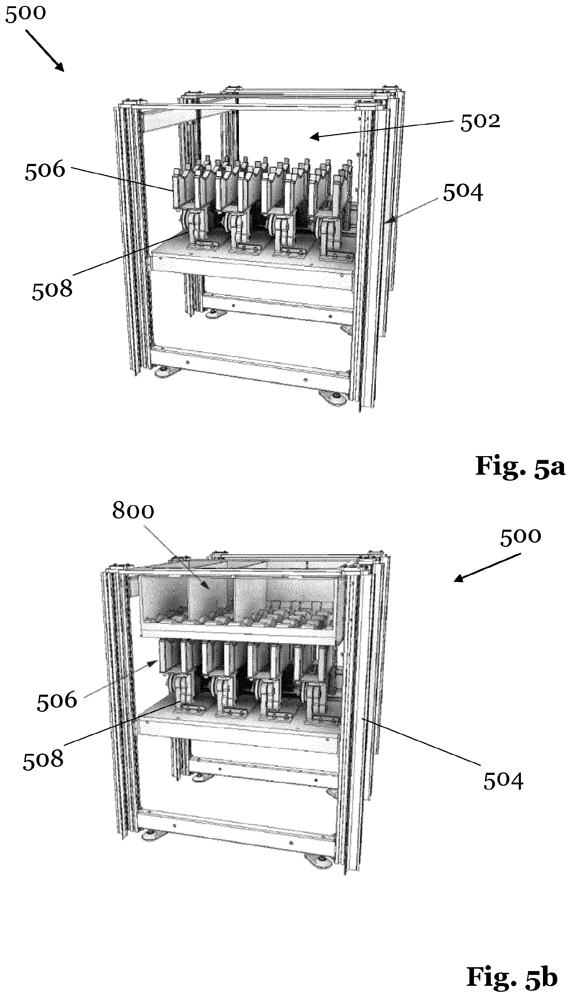

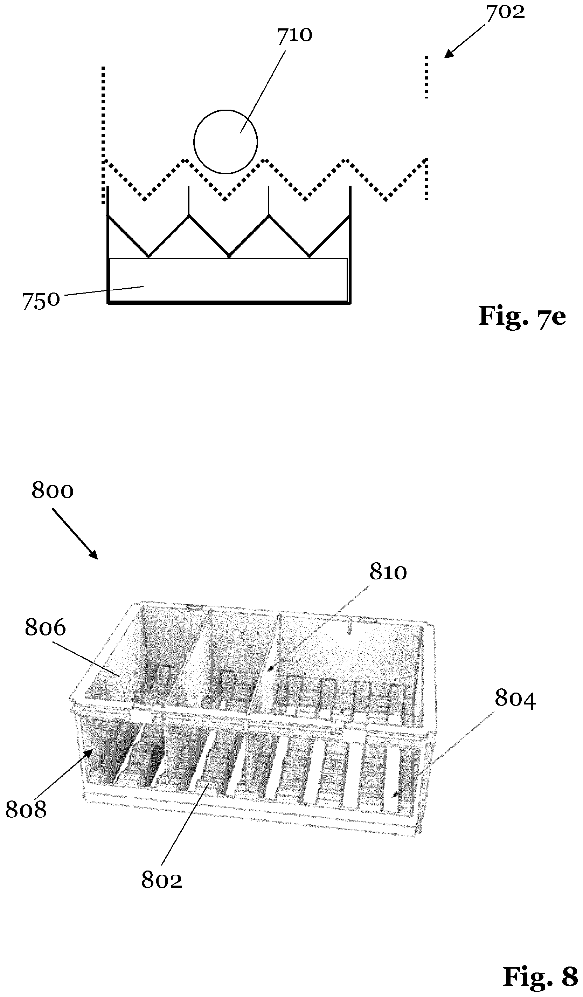

Figs. 5a and 5b show perspective views of a goods handling station 500 according to an example of the present disclosure. Fig. 5a shows the goods handling station 500 alone, and Fig. 5b shows the goods handling station 500 with a container 800 received at a container receiving area 502 of the goods handling station 500. The container 800 is described in more detail below with respect to Fig. 8, but it will be appreciated that this may be any container which is suitable for use with the goods handling station 500.

The goods handling station 500 comprises a frame 504 which provides a structure to which other components of the goods handling station 500 can be mounted. An outer casing or bodywork may be mounted to the frame 504 to enclose the goods handling station 500 in some examples, but the figures show the goods handling station 500 with the bodywork removed so that the components are shown.

At a top side thereof, the goods handling station 500 comprises a container receiving area 502 configured to receive a container (e.g., container 800) of an automated storage and retrieval system (e.g., a system as described above with respect to Figs. 1-4). The goods handling station 500 therefore has an opening in its top side so that a container can be lowered into the container receiving area 502 by a robot (e.g., robot 202 or 204 as described above). For example, the goods handling station 500 may be positioned at the bottom of a port column or the like. In this example, the container 800 is supported by the frame 504 to be held at the container receiving area 502 (in particular, the frame 504 engages a lip or rim of the container). However, it will be appreciated that, in other examples, a container may be held at the container receiving area 502 by the robot which lowers the container through a port column, or by any other suitable means (e.g., by being supported from below such as by a shelf or ledge or the like).

Below the container receiving area 502, the goods handling station 500 comprises a goods manipulator (the goods manipulator being supported below the container receiving area 502 by the frame 504). The goods manipulator comprises a plurality of support elements 506, and a plurality of movement mechanisms 508. In particular, the goods handling station 500 comprises eight support elements 506 and four movement mechanisms 504, wherein each movement mechanism 504 is configured to move a pair of support elements 506 along a looped path as described in more detail below. The eight support elements 506 are distributed along the width of the container receiving area 502 so as to generally correspond with the extend of the container X00. Each movement mechanism 504 is independently operable, such that each corresponding pair of support elements 506 can be independently moved as required to transfer or move goods within the container.

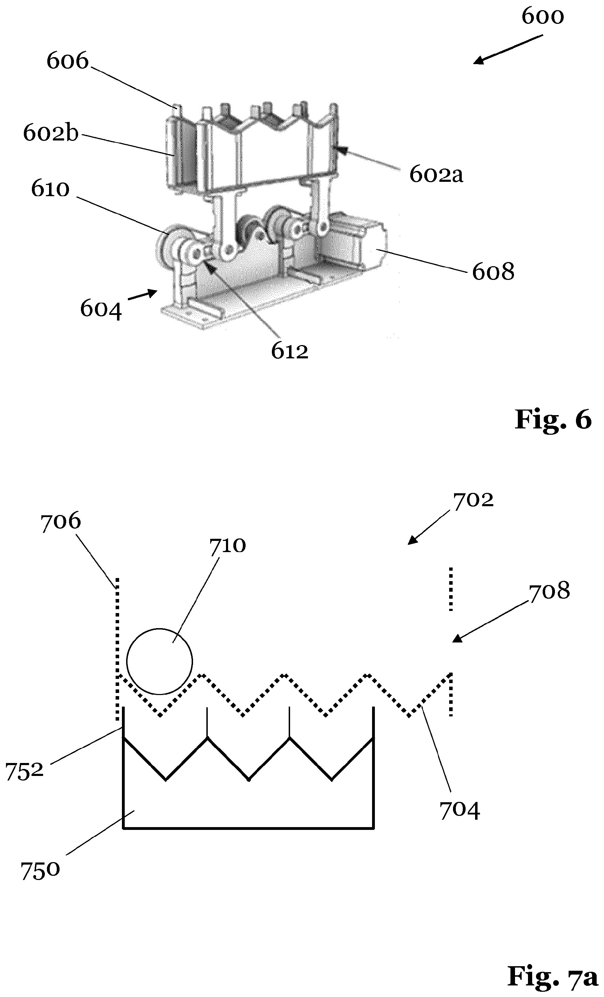

Fig. 6 shows a portion 600 of a goods manipulator that may be used in a goods handling station. For example, the goods manipulator used in the goods handling station 500 shown in Figs. 5a and 5b comprises four sets of the portion 600 depicted in Fig. 6.

The portion 600 comprises a pair of support elements 602a, 602b and a movement mechanism 604 which is connected to the pair of support elements 602a, 602b. The movement mechanism 604 is operable to move the support elements 602a, 602b together in a looped path in order to move goods laterally in steps in a manner described in more detail below.

As will be appreciated from Fig. 6, the support elements 602a, 602b each have a corrugated upper face, comprising three troughs or depressions and four ridges. At the apex of each ridge, the support elements 602a, 602b comprise an upstanding tooth 606. In this way, the support elements 602a, 602b are shaped to accommodate three items in the corrugations, and the upstanding teeth 606 can ensure that when the support elements 602a, 602b are moved the items are distributed between the corrugations.

The movement mechanism 604 comprises a motor 608. Where the goods manipulator comprises multiple such portions 600, each motor can be operated independently, thereby providing independent control over each pair of support elements and allowing individual items in a container to be moved accordingly. The drivetrain for connecting the motor 608 to the pair of support elements 602a, 602b comprises a belt drive 610 connected to the motor 608, wherein the belt drive 610 actuates a mechanical linkage 612 which is connected to the support elements 602a, 602b and configured to move the support elements 602a, 602b along a looped path. The belt drive 610 comprises a belt and a series of rollers for transferring motion from the motor 608to the mechanical linkage 612. The mechanical linkage 612 is connected to one of the rollers of the belt drive 610 and converts rotary motion of the roller into looped motion of the support elements 602a, 602b. In this example, the mechanical linkage 612 comprises a first connecting rod connected to a roller (such that the first connecting rod rotates with the roller), and a second connecting rod rotatably connected at a first end to the first connecting rod, and fixed a second end to the support elements 602a, 602b so as to move the support elements 602a, 602b in a looped path as the roller rotates.

Operation of a goods handling station to move goods within a container will now be described with reference to Figs. 7a-7e, which are schematic drawings showing a cross-sectional view of an item 710 within a container 702 which is received at the container handling position of a goods handling station (such as the goods handling station 500 of Fig. 5). The item 710 shown is a generally cylindrical object (e.g., a food or drinks can or bottle), but it will be appreciated that the goods handling station can be operated in a like manner to move any item which may be stored in the container 702.

The container 702 comprises a base 704 for supporting goods (such as item 710), and an upstanding sidewall 706 about the circumference of the base 704. There is an opening 708 through the sidewall 706 so that goods can be passed into or out of the container through the opening 708 when the container 702 is at a goods handling station. It will be appreciated from Figs. 7a-7e that the base 704 has a corrugated upper face, and the item 710 is received within one of the corrugations. The corrugated upper face of the base 704 can help to ensure that goods do not move relative to the base 704 as the container 702 is moved, but it will be appreciated that larger goods may simply rest on top of the corrugations.

A support element 750 of a goods manipulator of a goods handling station is also shown in Figs. 7a-7e. The support element 750 is generally configured as described above with respect to Fig. 6, for example in that the support element 750 has a corrugation upper face with an upstanding tooth 752 extending from an apex of each corrugation.

In this example, the item 710 is initially positioned at an edge (e.g., at the back or rear side, furthest from the opening 708) of the container 702, and Figs. 7a-7e show the item 710 being moved one step laterally towards the opening 708. However, it will be appreciated that goods may be positioned anywhere within the container and moved towards and/or through the opening 708 by the steps described below. It will also be appreciated that, although the item 710 shown is dimensioned to fit within a single corrugation, goods handling stations described herein can also be used to move larger items.

Fig. 7a shows the support element 750 in a first position relative to the container 702, wherein the support element 750 is positioned below a level of the base 704 of the container 702. When the support element 750 is below the level of the base 704 of the container 702, the item 710 is entirely supported by the container 702.

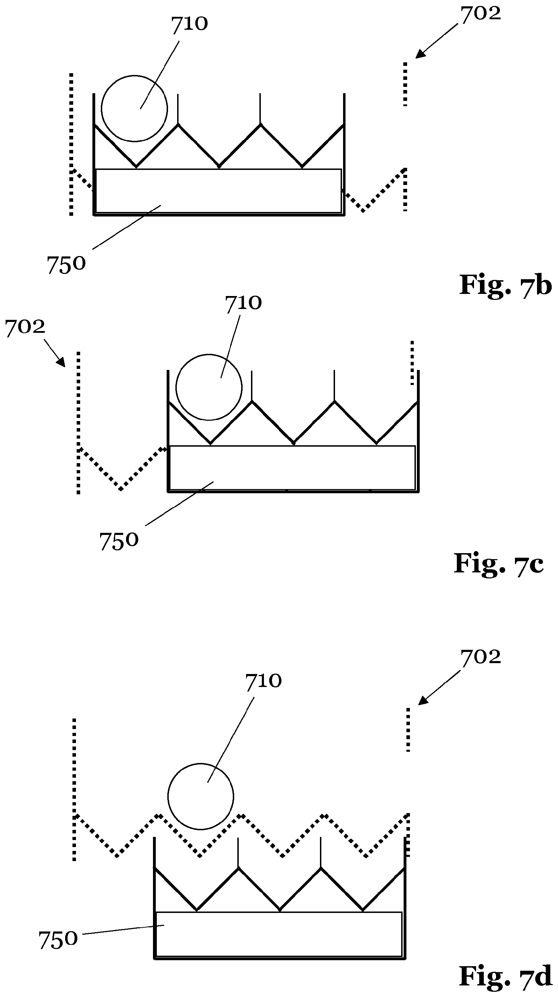

The movement mechanism of the goods handling station then moves the support element 750 to the position shown in Fig. 7b. In this position, the support element 750 extends into the container 702, above the level of the base 704, to lift and support the item 710. The support element 750 is also moved laterally towards the opening 708.

As shown in Fig. 7c, the support element 750 is moved further along its path by the movement mechanism, bringing the item 710 closer to the opening 708. The support element 750 begins to be lowered, lowering the item 710 towards the base 704 of the container 702.

In Fig. 7d, the support element 750 has moved below the level of the base 704 again, such that the item 710 is now supported by the base 704 of the container 702 again. However, the item 702 has been moved by the support element 705 one step laterally towards the opening 708, and is now received by a different corrugation in the upper surface of the base 704.

Fig. 7e shows the support element 750 back at its starting position, below the level of the base 704 and outside of the container 702. The support element 750 has thereby been moved through one complete loop by the movement mechanism. The item 710 has, correspondingly, been moved one step laterally towards the opening 708, and is now resting in a different corrugation in the upper surface of the base 702. When the support element 750 moves through another loop (i.e., repeating the movement shown in Figs. 7a-7e), the item 710 will again be lifted by the support element 750 and moved another step laterally towards the opening 708. However, as the item 710 is in a different starting position, it will be supported within a second corrugation in the upper surface of the support element 750. Further loops of the support element 750, wherein the looped path passes above and below the level of the base 704 of the container 702 to alternately raise and lower the item 710 from the base 704 of the container 702 will, correspondingly, move the item 710 laterally in steps. In this way, the goods manipulator comprising the support element 750 provides controlled movement of goods within the container 702, as the goods can be moved a required distance towards the opening 708 simply by controlling the number of loops through which the support element 750 is moved through. Similarly, this ensures that only a required number of goods are dispensed through the opening 708. As described above, the movement mechanism is more robust and easy to maintain.

Fig. 8 shows a perspective view of a container 800 for storing goods in an automated storage and retrieval system (e.g., the automated storage and retrieval system as described with respect to Fig. 1). In particular, the container 800 is suitable for use with a goods handling station as described herein, such as the goods handling station 500. For example, Fig. 5b shows the container 800 at the container receiving area 502 of the goods handling station 500.

The container 800 comprises a base 802 for supporting goods. The upper surface of the base 802 is corrugated (e.g., comprises ridges and grooves) so that smaller goods can settle between the corrugations (larger goods may be support across the apexes of multiple corrugations). Through the base 802 are a plurality of apertures 804 in the form of a plurality of parallel slots which extend across the base. The apertures 804 allow support elements of a goods handling station to extend into the container in order to move goods (e.g., as described above with respect to Figs. 7a-7e). For example, one support element may extend through each slot. The apertures 804 are perpendicular to the corrugations in the base, which aid the stepwise movement of goods - goods are moved in steps in a direction which is parallel to the slots by a goods manipulator, and the corrugations help hold goods in place between each step.

About the circumference of the base 804 there is an upstanding sidewall 806. Along one side of the base 804 there is an opening 808 through the sidewall 806. That is, the sidewall 806 extends about three edges of the base 804 and is open along one edge of the base 804. The opening 808 allows goods to be transferred out of the container 800 by a goods manipulator. The container 800 is open at its top side (i.e., the side opposite the base 804) to allow goods to be picked and/or packed by a warehouse operative if required.

The container 800 is divided into three sections by two dividers 810. For example, different types of goods may be stored in each section, or the dividers 810 may prevent the movement of goods between sections.

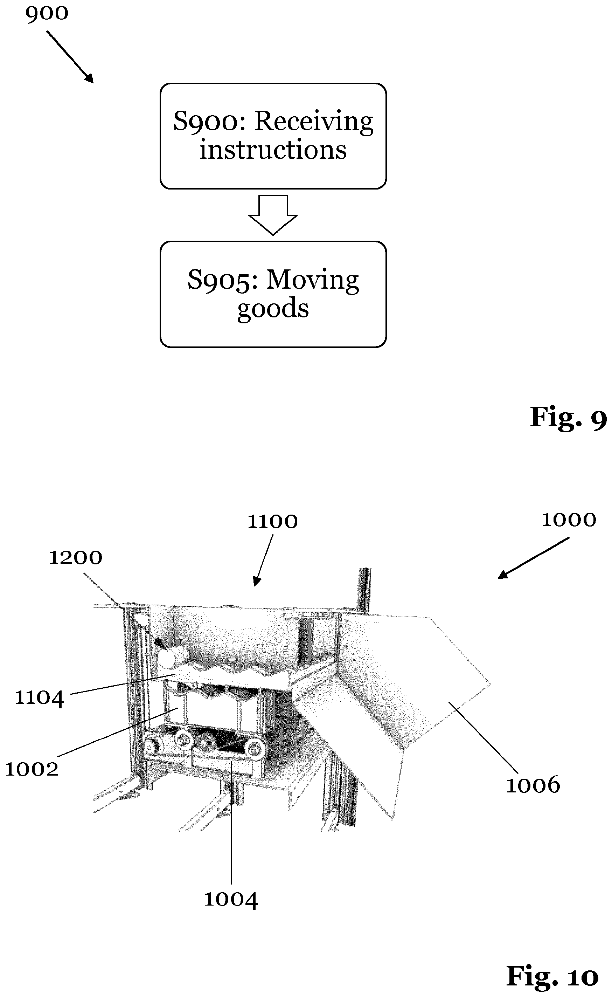

Fig. 9 is a flow chart showing a method 900 for transferring goods to and/or from a container of an automated storage and retrieval system using a goods handling station (e.g., the goods handling station 500 described above). The method may be performed or controlled by a control system (e.g., the control system 400 shown in Fig. 4), which can control components of the automated storage and retrieval system to operate and carry out the method 900.

In a first step S900 the method 900 comprises receiving instructions for transferring goods to or from a container of the automated storage and retrieval system. For example, this method 900 may also comprise operating a container handling vehicle to deliver a container to a goods handling station through a port column or the like, and then performing an operation on the goods within the container.

In a second step S905 the method 900 comprises moving, by a goods manipulator of the goods handling station, goods laterally in steps into or out of the container. For example, this step S905 may comprise controlling the goods handling station (in particular a goods manipulator thereof) to move the goods. For example, moving the goods may comprise operating a goods manipulator in a manner as described above with respect to Figs. 7a-7e. In this way, goods may be moved into or out of the container at the container handling position.

Fig. 10 shows a cross-section view of a goods handling station 1000 with a container 1100, within which an item 1200 is stored, received at a container receiving area. It will be appreciated that many features of the goods handling station 1000 are the same as the goods handling station described above with respect to Fig. 5, and so description of those features is not repeated.

The goods handling station 1000 comprises a goods manipulator for handling the item 1200 within the container 1100. The goods manipulator comprises a support element 1002 for supporting goods, and a movement mechanism 1004 operable to move the support element along a looped path for moving goods laterally in steps, wherein the looped path passes above and below a level of a base 1104 of the container 1100 received at the container receiving area. The goods manipulator may be the same as described above with respect to Fig. 5, for example, so that the support element 1002 is operable to move as shown in Figs. 7a-7e to move the item 1200.

The goods handling station 1000 further comprises a chute 1006 extending from a side thereof, wherein the goods manipulator is configured to move goods (e.g., item 1200) to the chute 1006. The chute 1006 is directed downwards away from the container 1100 and the container receiving position, such that goods moved out of the container 1100 are dispensed through the chut 1006. For example, the goods handling station 1000 may be used as a vending machine or the like, and goods may be dispensed to a user via the chute 1006. The chute 1006 can also help to ensure that users cannot touch or contact other parts of the goods handing station 1000 (e.g., by being at a length and/or angle which prevents a user from contact other parts of the goods handling station 1000) for safety.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A goods handling station for transferring goods to and/or from a container of an automated storage and retrieval system, the goods handling station comprising:
a container receiving area configured to receive a container of the automated storage and retrieval system; and
a goods manipulator, the goods manipulator comprising:
a support element for supporting goods, the support element arranged to extend into a container received at the container receiving area, and
a movement mechanism operable to move the support element along a looped path for moving goods laterally in steps, wherein the looped path passes above and below a level of a base of a container received at the container receiving area.

2. The goods handling station of claim 1, wherein the good manipulator comprises a plurality of elongate support elements.

3. The goods handling station of claim 1 or 2, wherein the support element has a corrugated upper face.

4. The goods handling station of claim 3, wherein the support element comprises an upstanding tooth extending from an apex of each corrugation.

5. The goods handling station of any preceding claim, wherein the support element is arranged to extend into a container received at the container receiving area from below the container receiving area.

6. The goods handling station of any preceding claim, wherein the goods manipulator comprises a plurality of independently operable movement mechanisms.

7. The goods handling station of claim 6, wherein each movement mechanism is configured to move a pair of elongate support elements.

8. The goods handling station of any preceding claim, wherein the movement mechanism comprises a belt drive and a mechanical linkage connected between the belt drive and the support element for moving the support element along the looped path.

9. The goods handling station of any preceding claim, wherein the goods handling station comprises a chute extending from a side thereof, wherein the goods manipulator is configured to move goods to the chute.

10. A container for storing goods in an automated storage and retrieval system, the container comprising:
a base for supporting goods;
an upstanding sidewall extending about the circumference of the base;
a plurality of apertures through the base; and
an opening through the upstanding sidewall.

11. The container of claim 10, wherein the plurality of apertures comprise a plurality of parallel slots which extend across the base.

12. The container of claim 10 or 11, wherein the base has a corrugated upper face.

13. The container of claim 12, wherein the corrugations extend across the base in a direction perpendicular to a plurality of parallel slots through the base.

14. A method for transferring goods to and/or from a container of an automated storage and retrieval system using a goods handling station according to any one of claims 1 to 9, the method comprising:
receiving instructions for transferring goods to or from a container; and
moving, by the goods manipulator, goods laterally in steps into or out of the container based on the received instructions.

15. A computer-readable medium comprising instructions which, when executed by a processor of a system, cause the system to perform the method of claim 14.
